(19) **Europäisches Patentamt European Patent Office Office européen des brevets**

(11) **EP 4 772 832 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*G01B 11/25* $^{(2006.01)}$

(21) Application number: 25847429.5

(86) International application number:
PCT/CN2025/112450

(22) Date of filing: 04.08.2025

(87) International publication number:
WO 2026/026978 (05.02.2026 Gazette 2026/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.09.2024 CN 202411228030

(71) Applicant: Shenzhen Hanswell Technology Co.,
Ltd.
Shenzhen, Guangdong 518000 (CN)

(72) Inventors:
• WEI, Yuming
  Shenzhen, Guangdong 518000 (CN)
• YANG, Yang
  Shenzhen, Guangdong 518000 (CN)
• HUANG, Tao
  Shenzhen, Guangdong 518000 (CN)
• HUANG, Gan
  Shenzhen, Guangdong 518000 (CN)
• ZHAI, Aiting
  Shenzhen, Guangdong 518000 (CN)

(74) Representative: Manitz Finsterwald
Patent- und Rechtsanwaltspartnerschaft mbB
Martin-Greif-Straße 1
80336 München (DE)

(54) **THREE-DIMENSIONAL MEASUREMENT DEVICE, AND METHOD FOR IMPROVING PROJECTION BRIGHTNESS UNIFORMITY**

(57) A method for improving uniformity of projection brightness of a projection device (11), the method comprising: acquiring geometric projection parameters of the projection device (11) (S200); on the basis of the obtained projection geometric parameters, calculating a brightness compensation coefficient for each pixel of an image to be projected (S210); on the basis of the brightness compensation coefficient for each pixel of said image, performing brightness compensation on said image, so as to obtain a brightness-compensated image to be projected (S220); and projecting the brightness-compensated image to be projected. By means of performing brightness compensation on an image to be projected, the brightness of structured light finally projected onto an object under inspection is more uniform. Consequently, the impact on gray-level variations caused by intrinsic attenuation of a light source is effectively reduced, allowing gray-level changes in a finally measurement image to more accurately height variations of said object itself. Moreover, the gray-level difference between a highly reflective area and other areas is reduced, yielding a more reliable three-dimensional measurement result. The method is simpler and more reliable. Further disclosed are a three-dimensional measurement apparatus and a computer-readable storage medium.

FIG. 2

EP 4 772 832 A1

## Description

### TECHNICAL FIELD

The present disclosure relates to the field of structured light, and more particularly, to a three-dimensional measurement apparatus and a method for improving uniformity of projection brightness.

### BACKGROUND OF THE DISCLOSURE

With the development of fields such as mold design, precision machining, product inspection, and industrial measurement, traditional two-dimensional image sensor technology is increasingly inadequate for the needs of production environments. The demand for three-dimensional measurement technology has been growing rapidly in recent years. Because three-dimensional measurement sensors provide an additional dimension of depth information, and depth itself is less sensitive to factors such as object pose and illumination, three-dimensional measurement holds greater advantages for object recognition and measurement tasks.

Currently, mainstream three-dimensional measurement sensors are categorized into contact and non-contact types. Non-contact types, which are more popular due to advantages like being non-destructive and non-deforming, often perform coordinate measurement by utilizing pre-calibrated geometric relationship among multiple sensors. Among these, structured light technology based on triangulation has shown increasing potential for application.

In a structured light system, a combination of a light source, a DMD (digital micro-mirror device), and a projection lens is generally employed. Among these, DLP (digital light projector) technology is predominantly used as the light source due to its advantages, including high native contrast, miniaturization, a sealed optical path, high brightness, and good uniformity. However, constraints in mechanical layout often necessitate designing the projector with a Scheimpflug off-axis configuration. This results in a high tilt angle between the projector and the plane of the object under inspection, which degrades the brightness uniformity of the projected pattern on the object. Specifically, regions closer to the light source exhibit significantly higher brightness than those farther away, thereby introducing errors into the obtained three-dimensional data.

Therefore, there is a need for a method that can improve the uniformity of structured light reconstruction system.

### SUMMARY OF THE DISCLOSURE

The present disclosure is directed to solving the technical problem of brightness non-uniformity caused by a high tilt angle of a projection device.

According to a first aspect, an embodiment provides a three-dimensional measurement apparatus, comprising:

one or more projection devices, configured to project an image to be projected comprising a preset pattern onto an object under inspection;

an image capture component, configured to capture an image of the object under inspection on which the preset pattern is projected, thereby obtaining a measurement image;

an image processing unit, configured to process the measurement image to obtain three-dimensional information of the object under inspection; and,

a controller, configured to:

obtain projection geometric parameters of the projection device;

calculate a brightness compensation coefficient for each pixel of the image to be projected based on the projection geometric parameters of the projection device;

perform brightness compensation on the image to be projected using the brightness compensation coefficient for each pixel thereof, thereby obtaining a brightness-compensated image to be projected; and

control the projection device to project the brightness-compensated image to be projected.

According to a second aspect, an embodiment provides a method for improving uniformity of projection brightness of a projection device, comprising:

obtaining projection geometric parameters of the projection device;

calculating a brightness compensation coefficient for each pixel of the image to be projected based on the projection geometric parameters of the projection device;

performing brightness compensation on the image to be projected using the brightness compensation coefficient for each pixel of the image, thereby obtaining a brightness-compensated image to be projected; and

projecting the brightness-compensated image to be projected.

According to the three-dimensional measurement apparatus and the method for improving projection brightness uniformity described in the above embodiments, brightness compensation is performed on the image to be projected. This causes each pixel of the actually projected image to exhibit a compensated brightness, thereby making the brightness of the structured light ultimately projected onto the object under inspection more uniform. Consequently, when the image capture component is used for grayscale imaging, additional flat-field correction is not required. First, it can effectively mitigate the impact of gray-level variations caused by the intrinsic attenuation of the light source. This allows the gray-level changes in the final measurement image to more accurately reflect the actual height variations of the object under inspection. Second, for objects with locally high reflectivity, if brightness compensation is not applied and such a highly reflective region is near the light source, it will result in an exaggerated gray-level difference between that region and others in the obtained measurement image. This, in turn, introduces significant errors into the reconstructed three-dimensional data for that region. In contrast, the disclosed brightness compensation reduces the brightness in areas proximate to the light source, which diminishes the gray-level difference between highly reflective and other regions, leading to more reliable three-dimensional measurement results. Furthermore, because the projected image is spatially more uniform, the three-dimensional reconstruction become less sensitive to the spatial location of the object under inspection. Moreover, compared to implementing complex optical or mechanical designs, the algorithmic processing applied to the image to be projected offers a more cost-effective and simpler solution.

## BRIEF DESCRIPTION OF THE DRAWINGS

FIG. 1 is a block diagram of a three-dimensional measurement apparatus;

FIG. 2 is a flowchart of a method for improving projection brightness uniformity of a projection device;

FIG. 3 is a schematic diagram of the positions of different components of the structured light system;

FIG. 4 shows the image to be projected prior to brightness compensation;

FIG. 5 is an image of brightness compensation coefficients; and

FIG. 6 shows the image to be projected after brightness compensation.

## DETAILED DESCRIPTION

Specific embodiments of the present disclosure will now be described in detail with reference to the accompanying drawings. Similar or related components in different embodiments are labeled with associated reference numerals. The following embodiments include detailed descriptions in order to facilitate understanding of the present disclosure. However, those skilled in the art will readily appreciate that certain features may be omitted under particular circumstances or substituted with other elements, materials, or methods. In some instances, certain operations related to the present disclosure are not explicitly described or illustrated herein. This is done to avoid obscuring the core aspects of the present disclosure. For those skilled in the art, a complete understanding of these operations can be attained through the descriptions provided in this specification and general technical knowledge in the art.

Additionally, the features, operations, or characteristics described in the specification may be combined in any suitable manner to form various embodiments. Similarly, steps or actions in the method descriptions may be reordered or modified in ways that would be obvious to those skilled in the art. Therefore, the sequences presented in the specification and drawings are intended solely to clarify the description of specific embodiments and do not imply mandatory orderings, unless explicitly stated that a particular sequence is required.

The numerical designations assigned to components herein, such as "first", "second", and the like, are used solely to distinguish between the described objects and carry no implication of order or technical significance. The terms "connected" and "coupled" as used herein, unless otherwise specified, encompass both direct and indirect connections (including mechanical and electrical connections).

In an embodiment of the present disclosure, a relationship between each micro-mirror on a projection device and a theoretical brightness of its corresponding projection field of view is established based on a structure and a spatial relationship of a structured light system, yielding a brightness compensation coefficient. Brightness compensation is then performed on an image to be projected using the brightness compensation coefficient, such that gray-level variations in a measurement image captured by a camera accurately reflect the height profile of an object under inspection, thereby improving the reliability of the three-dimensional measurement results.

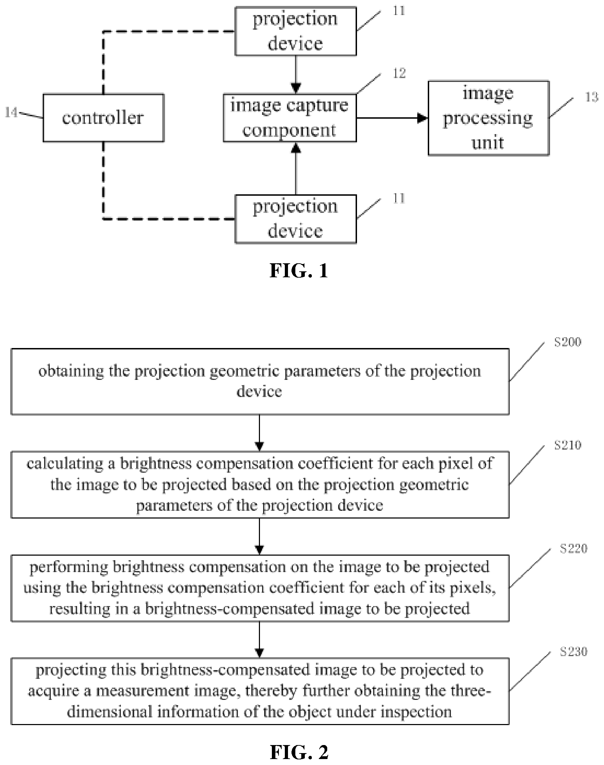

In the structured light system, and with reference to FIG. 1, one or more projection devices 11 alternately project an image to be projected comprising a preset pattern onto the object under inspection. The projection device 11 in this embodiment includes a matrix of micro-mirrors, where each micro-mirror corresponds to a pixel in the image to be projected. Each micro-mirror is configured to project that pixel onto the object under inspection, thereby forming a projection field of view on the surface of the object under inspection, which is a trapezoidal region. After a single projection device 11 projects the image to be projected comprising a preset pattern onto the object under inspection, an image capture component 12 captures an image of the object under inspection, thereby obtaining a measurement image of the object under inspection. In this embodiment, the image capture component 12 is a camera. Subsequently, an image processing unit 13 decodes the obtained measurement image using a corresponding decoding algorithm to obtain a phase image. The phase values are then converted into the actual three-dimensional coordinates of the object based on the pre-calibrated position parameters.

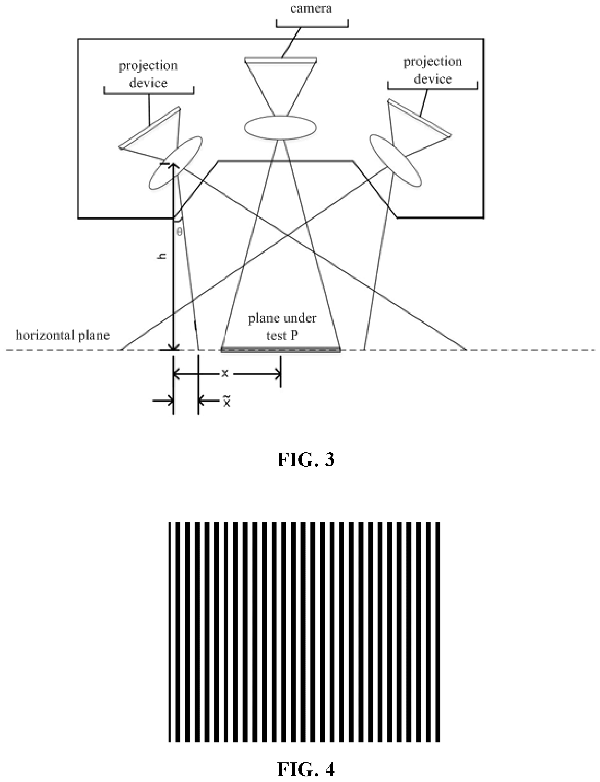

In this embodiment, fringe-encoded structured light is employed as it is one of the prevalent three-dimensional measurement techniques, offering advantages such as high accuracy, non-contact operation, high speed, and robustness. Its underlying measurement principle is triangulation, which involves calculating the intersection of a light plane projected by the projection device and the viewing ray corresponding to a camera pixel to obtain the three-dimensional coordinates of the object under inspection. The encoding of the light plane can be achieved through various methods, with classic approaches being Gray code and/or sinusoidal phase shifting, known for their high stability and precision. Therefore, this embodiment utilizes phase-shift images and/or Gray code images, generated via fringe-encoded structured light, as the initial images to be projected (i.e., the images to be projected prior to brightness compensation, as shown in FIG. 4). These images to be projected are subsequently processed and then projected onto the surface of the object under inspection.

In this process, due to light attenuation during propagation, regions on the object under inspection closer to the light source exhibit higher brightness, while regions farther away exhibit lower brightness. That is, the gray-level variations in the measurement image obtained by the camera are not solely due to the height variation of the object itself but are also influenced by the inherent attenuation of the projected illumination. Therefore, brightness compensation can be applied to the image to be projected at the projection end, based on a theoretical brightness model (or the projection geometric parameters) associated with the projection field of view of each individual micro-mirror. This compensation results in more uniform brightness projected onto the object under inspection. As a result, the gray-level information in the measurement image more accurately reflects the actual three-dimensional information of the object under inspection, thereby obtaining more accurate and reliable three-dimensional measurement results. The specific process in which the controller 14 performs brightness compensation on the image to be projected in this embodiment is as follows:
First, the projection geometric parameters of the projection device are obtained.

For a single micro-mirror on the projection device, that micro-mirror is set to an "on" state while all other micro-mirrors are set to an "off" state. The light is projected onto the plane where the object under inspection is located (hereinafter referred to as the plane under test). In this embodiment, this plane is referred to as the measurement plane. Then, the camera is used to capture an image of the plane under test, thereby obtaining a surface image. This resulting surface image contains only the projection field of view (which is a trapezoidal region) formed by that micro-mirror on the plane under test. Then, a corner detection algorithm (e.g., the Harris corner detection algorithm) is applied to the surface image to detect the corners, obtaining the pixel coordinates of the four corners of the trapezoidal region. Using these pixel coordinates along with the camera's intrinsic matrix and extrinsic matrix, the spatial (world) coordinates of these four corners are obtained. Subsequently, the direct linear transformation (DLT) algorithm is used to estimate a homography matrix based on the spatial coordinates of these four corners and the corresponding pixel coordinates of the micro-mirror on the DMD array. This establishes a mapping between the micro-mirror and the projection field of view formed on the plane under test. By incorporating the camera's intrinsic and extrinsic matrices, a precise correspondence between the micro-mirror and the trapezoidal region in the surface image is obtained. For example, for any given micro-mirror on the projection device, the projection field of view formed by that micro-mirror in the surface image is a trapezoidal region. For the i-th corner point (where i = 1, 2, 3, 4) of this trapezoidal region, the pixel coordinates of the corner point are transformed to the world coordinate system based on the camera's intrinsic matrix and extrinsic matrix, to obtain the spatial coordinates (world coordinates) of that corner point, as follows:

$$\begin{bmatrix} X_{wi} \\ Y_{wi} \\ Z_{wi} \\ 1 \end{bmatrix} = E \cdot K^{-1} \cdot \begin{bmatrix} x_i \\ y_i \\ 1 \end{bmatrix}$$

where: $(x_i, y_i)$ represents the pixel coordinates of the $i$-th corner point in the surface image; $K$ is the intrinsic matrix of the camera, $K^{-1}$ is the inverse matrix of the intrinsic matrix of the camera, $E$ is the extrinsic matrix of the camera; and $(X_{wi}, Y_{wi}, Z_{wi})$ represents the spatial coordinates of the i-th corner point.

The other corner points in this trapezoidal region are processed to obtain the spatial coordinates of the four corner points. In this embodiment, the coordinates of the upper-left corner of each micro-mirror are given by its row and column indices, that is, the pixel coordinates of the micro-mirror. Accordingly, the coordinates of the other three corners of the micro-mirror are represented by the pixel coordinates of adjacent micro-mirrors. For example, for the micro-mirror at the $u$-th row and $v$-th column, the pixel coordinates of this micro-mirror are $(u, v)$, that is, the coordinates of its upper-left corner are $(u, v)$. The coordinates of its upper-right corner are $(u, v+1)$, the coordinates of its lower-left corner are $(u+1, v)$, and the coordinates of its lower-right corner are $(u+1, v+1)$. Thus, the four corners of the micro-mirror have a one-to-one correspondence with the four corner points in the trapezoidal region. Then, the DLT algorithm is used to estimate a homography matrix H based on the spatial coordinates of the four corner points in the trapezoidal region and the pixel coordinates corresponding to the four corners of the micro-mirror. The obtained homography matrix H is a 3×3 matrix. Let the spatial coordinates of a corner point corresponding to the pixel coordinates of the current micro-mirror be $(X, Y, Z)$. The transformation between the pixel coordinates and the spatial coordinates can then be expressed as by the homography matrix H as follows:

$$\begin{bmatrix} u \\ v \\ 1 \end{bmatrix} = H \cdot \begin{bmatrix} X \\ Y \\ Z \end{bmatrix}$$

From this, a correspondence relationship between any micro-mirror on the projection device and the four corner points of its projection field of view in the surface image can be established. In this embodiment, the projection geometric parameters refer to this correspondence. Therefore, for any given micro-mirror on the projection device, the four corner points of its corresponding projection field of view in the surface image can be obtained based on the pixel coordinates of that micro-mirror.

Then, a brightness compensation coefficient for each pixel of the image to be projected is calculated based on the projection geometric parameters of the projection device.

For any given micro-mirror in the projection device, its corresponding four corner points of the trapezoidal projection field of view are obtained based on the established correspondence. To select the two corner points corresponding to the bottom base of the trapezoid, the four corner points are grouped according to their x-coordinates: corner points sharing the same x-coordinate are placed into one group. This yields two groups of corner points, with each group containing two corner points. Then, the Euclidean distance between the two corner points within each group is calculated. The group exhibiting the maximum Euclidean distance is identified as corresponding to the bottom base of the trapezoid. The two corner points in this group share the same x-coordinate. In this embodiment, these two corner points are referred to as the "long-side corner points". It should be noted that in geometry, the bottom base of a trapezoid refers to the longer of its two parallel sides. The ratio of the x-coordinate of the obtained long-side corner points to the height of the corresponding micro-mirror is calculated; the arctangent of this ratio is calculated; and the cosine of this arctangent value is obtained. The fixed gain of the projection device is obtained. The theoretical brightness of the projection field of view is then taken as the ratio of this fixed gain to the $n$-th power of the obtained cosine value, where $n$ can be 2, 3, 4, etc., and can be set according to actual requirements.

A typical scenario in a structured light system, namely a configuration comprising two projection devices and one camera, is taken as an example. A schematic diagram of their positions is shown in FIG. 3. The plane under test is denoted as P. The center point of the projection device is at $(x, h)$, where $x$ is the Euclidean distance between the center point of the projection device and the center point of the camera, and $h$ is the height of the center point of the projection device relative to the horizontal plane. Then, the theoretical brightness at a position with a horizontal distance of $\tilde{x}$ within the projection field of view of the projection device can be expressed as $k/cos^n(\theta)$, where $arctan(\bar{x}/h)$, $k$ is the fixed gain of the projection device, which is related to the optical power and the field of view of the projection device.

For the $e$-th micro-mirror on the projection device, the two corner points corresponding to the bottom base of its associated trapezoidal region are obtained. The theoretical brightness of the projection field of view formed by this micro-mirror on the plane under test can then be expressed as:

$$L_e = k \times \frac{1}{cos^n[arctan(b_e/h_e)]}$$

where: $L_e$ is the theoretical brightness of the projection field of view corresponding to the $e$-th micro-mirror, $h_e$ is the height of the $e$-th micro-mirror relative to the horizontal plane, $b_e$ is the x-coordinate of the long-side corner point corresponding to the e-th micro-mirror; $k$ is the fixed gain of the projection device; $cos()$ denotes the cosine function; and $arctan()$ denotes the inverse tangent (arctangent) function.

Since there is a one-to-one correspondence between the micro-mirrors on the projection device and the pixels in the image to be projected, the theoretical brightness of the projection field of view corresponding to the $e$-th micro-mirror is also the theoretical brightness corresponding to the $e$-th pixel in the image to be projected.

Subsequently, the reciprocal of this obtained theoretical brightness is taken as a gain coefficient for the $e$-th micro-mirror. A scale transformation coefficient is then applied to normalize this gain coefficient. By using this scale transformation coefficient, the gain coefficient of the $e$-th micro-mirror is mapped to the range (0,1). This normalized gain coefficient is defined as the brightness compensation coefficient for the e-th micro-mirror, which is equivalently the brightness compensation coefficient for the e-th pixel. The scale transformation coefficient can be set according to practical requirements.

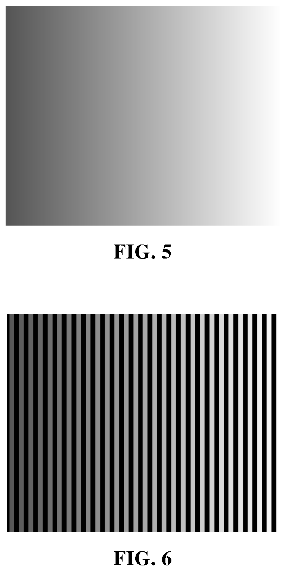

For each pixel in the image to be projected, the aforementioned process is applied. This yields the theoretical brightness of the projection field of view corresponding to that pixel, and consequently, its brightness compensation coefficient. The set of brightness compensation coefficients for all pixels forms a brightness compensation image, as shown in FIG. 5.

Subsequently, brightness compensation is performed on the image to be projected using the brightness compensation coefficient for each of its pixels, resulting in a brightness-compensated image to be projected.

Specifically, for each pixel in the image to be projected, the product of its gray value and its corresponding brightness compensation coefficient is calculated. This product is taken as the brightness-compensated result for that pixel. The assembly of all such pixel-wise results constitutes the brightness-compensated image to be projected, as shown in FIG. 6.

Finally, this brightness-compensated image to be projected is projected. A measurement image is then acquired, from which the three-dimensional information of the object under inspection is obtained.

The brightness-compensated image to be projected is projected from the projection device onto the object under inspection. The camera then captures an image of the object under inspection, thereby obtaining a measurement image. This measurement image is processed by the image processing unit 13. The processing comprises structured light decoding and three-dimensional reconstruction of the measurement image, from which the true three-dimensional information of the object under inspection is obtained.

Please refer to FIG. 1. In this embodiment, a three-dimensional measurement apparatus operates as follows. First, the projection geometric parameters of the projection device 11 are obtained by the controller 14. Based on these parameters, the brightness compensation coefficient for each pixel of the image to be projected is calculated. Subsequently, brightness compensation is performed on the image to be projected using these coefficients. The brightness-compensated image is then projected. Following the projection, a measurement image is acquired by the image capture component 12 capturing the object under inspection. Finally, the three-dimensional information of the object under inspection is obtained by processing this measurement image with the image processing unit 13.

In this embodiment, brightness compensation performed on the image to be projected at the projection end results in more uniform brightness of the structured light ultimately projected onto the object under inspection. Consequently, when gray-scale imaging is performed by the image capture component 12, additional flat-field correction is not required. First, the impact of the gray-level variations caused by the intrinsic attenuation of the light source itself is effectively mitigated. This allows the gray-level changes in the final measurement image to more accurately reflect the actual height variations of the object under inspection. Second, for objects with locally high reflectivity, the absence of brightness compensation would cause a region near the light source to exhibit higher gray-level variations relative to other regions in the obtained measurement image. This, in turn, introduces significant errors into the three-dimensional data reconstructed for that region. In contrast, the applied brightness compensation reduces the brightness in areas proximate to the light source, thereby diminishing the gray-level difference between the highly reflective region and other regions and yielding more reliable three-dimensional measurement results. Furthermore, because the projected image is spatially more uniform, the three-dimensional reconstruction becomes less sensitive to the spatial location of the object under inspection. Moreover, compared to the implementation of complex optical or mechanical designs, the algorithmic processing applied to the image to be projected offers a more cost-effective and simpler solution. Additionally, the disclosed method remains applicable in scenarios where the camera itself is positioned at a high tilt angle.

A method for improving uniformity of projection brightness of a projection device is shown in FIG. 2, comprising: Step S200: obtaining the projection geometric parameters of the projection device.

For a single micro-mirror on the projection device, that micro-mirror is set to an "on" state while all other micro-mirrors are set to an "off" state. The light is projected onto the plane where the object under inspection is located (hereinafter referred to as the plane under test). In this embodiment, this plane is referred to as the measurement plane. Then, the camera is used to capture an image of the plane under test, thereby obtaining a surface image. This resulting surface image contains only the projection field of view (which is a trapezoidal region) formed by that micro-mirror on the plane under test. Then, a corner detection algorithm (e.g., the Harris corner detection algorithm) is applied to the surface image to detect the corners, obtaining the pixel coordinates of the four corners of the trapezoidal region. Using these pixel coordinates along with the camera's intrinsic matrix and extrinsic matrix, the spatial (world) coordinates of these four corners are obtained. Subsequently, the direct linear transformation (DLT) algorithm is used to estimate a homography matrix based on the spatial coordinates of these four corners and the corresponding pixel coordinates of the micro-mirror on the DMD array. This establishes a mapping between the micro-mirror and the projection field of view formed on the plane under test. By incorporating the camera's intrinsic and extrinsic matrices, a precise correspondence between the micro-mirror and the trapezoidal region in the surface image is obtained.

For example, for any given micro-mirror on the projection device, the projection field of view formed by that micro-mirror in the surface image is a trapezoidal region. For the $i$-th corner point (where i = 1, 2, 3, 4) of this trapezoidal region, the pixel coordinates of the corner point are transformed to the world coordinate system based on the camera's intrinsic matrix and extrinsic matrix, to obtain the spatial coordinates (world coordinates) of that corner point, as follows:

$$\begin{bmatrix} X_{wi} \\ Y_{wi} \\ Z_{wi} \\ 1 \end{bmatrix} = E \cdot K^{-1} \cdot \begin{bmatrix} x_i \\ y_i \\ 1 \end{bmatrix}$$

where: $(x_i, y_i)$ represents the pixel coordinates of the $i$-th corner point in the surface image; $K$ is the intrinsic matrix of the camera, $K^{-1}$ is the inverse matrix of the intrinsic matrix of the camera, $E$ is the extrinsic matrix of the camera; and $(X_{wi}, Y_{wi}, Z_{wi})$ represents the spatial coordinates of the $i$-th corner point.

The other corner points in this trapezoidal region are processed to obtain the spatial coordinates of the four corner points. In this embodiment, the coordinates of the upper-left corner of each micro-mirror are given by its row and column indices, that is, the pixel coordinates of the micro-mirror. Accordingly, the coordinates of the other three corners of the micro-mirror are represented by the pixel coordinates of adjacent micro-mirrors. For example, for the micro-mirror at the $u$-th row and $v$-th column, the pixel coordinates of this micro-mirror are $(u, v)$, that is, the coordinates of its upper-left corner are $(u, v)$. The coordinates of its upper-right corner are $(u, v+1)$, the coordinates of its lower-left corner are $(u+1, v)$, and the coordinates of its lower-right corner are $(u+1, v+1)$. Thus, the four corners of the micro-mirror have a one-to-one correspondence with the four corner points in the trapezoidal region. Then, the DLT algorithm is used to estimate a homography matrix H based on the spatial coordinates of the four corner points in the trapezoidal region and the pixel coordinates corresponding to the four corners of the micro-mirror. The obtained homography matrix H is a 3×3 matrix. Let the spatial coordinates of a corner point corresponding to the pixel coordinates of the current micro-mirror be $(X, Y, Z)$. The transformation between the pixel coordinates and the spatial coordinates can then be expressed as by the homography matrix H as follows:

$$\begin{bmatrix} u \\ v \\ 1 \end{bmatrix} = H \cdot \begin{bmatrix} X \\ Y \\ Z \end{bmatrix}$$

From this, a correspondence relationship between any micro-mirror on the projection device and the four corner points of its projection field of view in the surface image can be established. In this embodiment, the projection geometric parameters refer to this correspondence. Therefore, for any given micro-mirror on the projection device, the four corner points of its corresponding projection field of view in the surface image can be obtained based on the pixel coordinates of that micro-mirror.

Step S210: calculating a brightness compensation coefficient for each pixel of the image to be projected based on the projection geometric parameters of the projection device.

For any given micro-mirror in the projection device, its corresponding four corner points of the trapezoidal projection field of view are obtained based on the established correspondence. To select the two corner points corresponding to the bottom base of the trapezoid, the four corner points are grouped according to their x-coordinates: corner points sharing the same x-coordinate are placed into one group. This yields two groups of corner points, with each group containing two corner points. Then, the Euclidean distance between the two corner points within each group is calculated. The group exhibiting the maximum Euclidean distance is identified as corresponding to the bottom base of the trapezoid. The two corner points in this group share the same x-coordinate. In this embodiment, these two corner points are referred to as the "long-side corner points". It should be noted that in geometry, the bottom base of a trapezoid refers to the longer of its two parallel sides. The ratio of the x-coordinate of the obtained long-side corner points to the height of the corresponding micro-mirror is calculated; the arctangent of this ratio is calculated; and the cosine of this arctangent value is obtained. The fixed gain of the projection device is obtained. The theoretical brightness of the projection field of view is then taken as the ratio of this fixed gain to the n-th power of the obtained cosine value, where n can be 2, 3, 4, etc., and can be set according to actual requirements.

A typical scenario in a structured light system, namely a configuration comprising two projection devices and one camera, is taken as an example. A schematic diagram of their positions is shown in FIG. 3. The plane under test is denoted as P. The center point of the projection device is at $(x,h)$, where x is the Euclidean distance between the center point of the projection device and the center point of the camera, and h is the height of the center point of the projection device relative to the horizontal plane. Then, the theoretical brightness at a position with a horizontal distance of $\bar{x}$ within the projection field of view of the projection device can be expressed as $k/cos^n(\theta)$, where $arctan(\bar{x}/h)$, $k$ is the fixed gain of the projection device, which is related to the optical power and the field of view of the projection device.

For the $e$-th micro-mirror on the projection device, the two corner points corresponding to the bottom base of its associated trapezoidal region are obtained. The theoretical brightness of the projection field of view formed by this micro-mirror on the plane under test can then be expressed as:

$$L_e = k \times \frac{1}{cos^n[arctan(b_e/h_e)]}$$

where: $L_e$ is the theoretical brightness of the projection field of view corresponding to the $e$-th micro-mirror, $h_e$ is the height of the $e$-th micro-mirror relative to the horizontal plane, $b_e$ is the x-coordinate of the long-side corner point corresponding to the $e$-th micro-mirror; $k$ is the fixed gain of the projection device; $cos()$ denotes the cosine function; and $arctan()$ denotes the inverse tangent (arctangent) function.

Since there is a one-to-one correspondence between the micro-mirrors on the projection device and the pixels in the image to be projected, the theoretical brightness of the projection field of view corresponding to the $e$-th micro-mirror is also the theoretical brightness corresponding to the $e$-th pixel in the image to be projected.

Subsequently, the reciprocal of this obtained theoretical brightness is taken as a gain coefficient for the e-th micro-mirror. A scale transformation coefficient is then applied to normalize this gain coefficient. By using this scale transformation coefficient, the gain coefficient of the e-th micro-mirror is mapped to the range (0,1). This normalized gain coefficient is defined as the brightness compensation coefficient for the e-th micro-mirror, which is equivalently the brightness compensation coefficient for the e-th pixel. The scale transformation coefficient can be set according to practical requirements.

For each pixel in the image to be projected, the aforementioned process is applied. This yields the theoretical brightness of the projection field of view corresponding to that pixel, and consequently, its brightness compensation coefficient. The set of brightness compensation coefficients for all pixels forms a brightness compensation image, as shown in FIG. 5.

Step S220: performing brightness compensation on the image to be projected using the brightness compensation coefficient for each of its pixels, resulting in a brightness-compensated image to be projected.

Specifically, for each pixel in the image to be projected, the product of its gray value and its corresponding brightness compensation coefficient is calculated. This product is taken as the brightness-compensated result for that pixel. The assembly of all such pixel-wise results constitutes the brightness-compensated image to be projected, as shown in FIG. 6.

Step S230: projecting this brightness-compensated image to be projected to acquire a measurement image, thereby further obtaining the three-dimensional information of the object under inspection.

The brightness-compensated image to be projected is projected from the projection device onto the object under inspection. The camera then captures an image of the object under inspection, thereby obtaining a measurement image. This measurement image is processed by structured light decoding and three-dimensional reconstruction, thereby obtaining the true three-dimensional information of the object under inspection.

It will be understood by those skilled in the art that all or part of the functions of the various methods in the foregoing embodiments may be implemented in hardware or by a computer program. When all or part of the functions are implemented by a computer program, the program may be stored in a computer-readable storage medium, such as a read-only memory (ROM), a random access memory (RAM), a magnetic disk, an optical disk, a hard disk (HDD), and the like. The functions described above can be realized by executing the program using a computer. For instance, the program may be stored in a memory of a device, and execution of the program by a processor of the device enables the realization of all or part of the aforementioned functions. Alternatively, when all or part of the functions are implemented by a computer program, the program may also reside on a storage medium such as a server, another computer, a magnetic disk, an optical disk, a flash drive, or a mobile hard disk. The program may then be downloaded or copied to a local device and stored in its memory, or by performing a system version update on the local device. When the program in the memory is executed by a processor, all or part of the functions in the foregoing embodiments may be achieved.

The foregoing specific examples are used to illustrate the present disclosure merely for facilitating understanding thereof, and are not intended to limit the present disclosure. For those skilled in the art to which the present disclosure pertains, several simple deductions, modifications or substitutions may be made based on the concept of the present disclosure.

**Claims**

1. A three-dimensional measurement apparatus, comprising:

   one or more projection devices, the projection device configured to project an image to be projected comprising a preset pattern onto an object under inspection;
   an image capture component, configured to capture an image of the object under inspection on which the preset pattern is projected, thereby obtaining a measurement image;
   an image processing unit, configured to process the measurement image to obtain three-dimensional information of the object under inspection; and
   a controller, configured to:

      obtaining projection geometric parameters of the projection device;
      calculating a brightness compensation coefficient for each pixel in the image to be projected based on the projection geometric parameters of the projection device;
      performing brightness compensation on the image to be projected based on the brightness compensation coefficient for each pixel in the image to be projected, thereby obtaining a brightness-compensated image to be projected; and
      controlling the projection device to project the brightness-compensated image to be projected.

2. The three-dimensional measurement apparatus according to claim 1, wherein:

   the projection device comprises a plurality of micro-mirrors arranged in a matrix, each micro-mirror being configured to project one pixel of the image to be projected;
   the controller calculates the brightness compensation coefficient for each pixel in the image to be projected based on the projection geometric parameters of the projection device, the calculating comprising:

      for any pixel in the image to be projected,
      obtaining four corner points of a projection field of view corresponding to the pixel based on the projection geometric parameters of the projection device,
      obtaining a theoretical brightness of the projection field of view based on coordinates of the four corner points and a height of the micro-mirror corresponding to the pixel;
      taking a reciprocal of the obtained theoretical brightness as a gain coefficient for the pixel;
      obtaining a scale transformation coefficient; and
      normalizing the obtained gain coefficient according to the scale transformation coefficient, wherein a normalized result of the gain coefficient is the brightness compensation coefficient for the pixel.

3. The three-dimensional measurement apparatus according to claim 2, wherein the controller obtains the theoretical brightness of the projection field of view based on the coordinates of the four corner points and the height of the micro-mirror corresponding to the pixel, the obtaining comprising:

> taking the projection field of view as a trapezoidal region;
> referring to two corner points among the four corner points that correspond to a lower base of the trapezoidal region as long-side corner points, the two long-side corner points having a same x-coordinate;
> calculating a ratio of the x-coordinate of the long-side corner points to the height of the micro-mirror corresponding to the pixel;
> calculating an arctangent of the calculated ratio;
> calculating a cosine of the calculated arctangent;
> obtaining a fixed gain of the projection device; and
> taking a ratio of the fixed gain to an n-th power of the calculated cosine as the theoretical brightness of the projection field of view.

4. The three-dimensional measurement apparatus according to claim 1, wherein the controller performs brightness compensation on the image to be projected based on the brightness compensation coefficient for each pixel in the image to be projected, thereby obtaining the brightness-compensated image to be projected, the performing comprising:

> calculating a product of the gray value of each pixel and the corresponding brightness compensation coefficient;
> taking the calculated product as the brightness compensation result for the pixel, wherein the brightness compensation results of all pixels constitute the brightness-compensated image to be projected.

5. The three-dimensional measurement apparatus according to claim 1, wherein the image to be projected comprises a phase-shift image and/or a gray code image.

6. A method for improving uniformity of projection brightness of a projection device, comprising:

> obtaining projection geometric parameter of the projection device;
> calculating a brightness compensation coefficient for each pixel of an image to be projected based on the projection geometric parameters of the projection device;
> performing brightness compensation on the image to be projected based on the brightness compensation coefficient for each pixel of the image to be projected, thereby obtaining a brightness-compensated image to be projected; and
> projecting the brightness-compensated image to be projected.

7. The method according to claim 6, wherein

> the projection device comprises a plurality of micro-mirrors arranged in a matrix, each micro-mirror being configured to project one pixel of the image to be projected;
> the calculating a brightness compensation coefficient for each pixel of the image to be projected based on the projection geometric parameters of the projection device, comprising:

>> for any pixel in the image to be projected,
>> obtaining four corner points of a projection field of view corresponding to the pixel based on the projection geometric parameters of the projection device,
>> obtaining a theoretical brightness of the projection field of view based on coordinates of the four corner points and a height of the micro-mirror corresponding to the pixel;
>> taking a reciprocal of the obtained theoretical brightness as a gain coefficient for the pixel;
>> obtaining a scale transformation coefficient; and
>> normalizing the obtained gain coefficient according to the scale transformation coefficient, wherein a normalized result of the gain coefficient is the brightness compensation coefficient for the pixel.

8. The method according to claim 7, wherein the obtaining the theoretical brightness of the projection field of view based on coordinates of the four corner points and the height of the micro-mirror corresponding to the pixel, comprising:

> taking the projection field of view as a trapezoidal region;

referring to two corner points among the four corner points that correspond to a lower base of the trapezoidal region as long-side corner points, the two long-side corner points having a same x-coordinate;

calculating a ratio of the x-coordinate of the long-side corner points to the height of the micro-mirror corresponding to the pixel;

calculating an arctangent of the calculated ratio;

calculating a cosine of the calculated arctangent;

obtaining a fixed gain of the projection device; and

taking a ratio of the fixed gain to an n-th power of the calculated cosine as the theoretical brightness of the projection field of view.

9. The method according to claim 6, wherein the performing brightness compensation on the image to be projected based on the brightness compensation coefficient for each pixel of the image to be projected, thereby obtaining a brightness-compensated image to be projected, comprising:

calculating a product of the gray value of each pixel and the corresponding brightness compensation coefficient;

taking the calculated product as the brightness compensation result for the pixel, wherein the brightness compensation results of all pixels constitute the brightness-compensated image to be projected.

10. A computer-readable storage medium having stored thereon a computer program executable by a processor to implement the method according to any one of claims 6 to 9.

projection device 11

controller 14

image capture component 12

image processing unit 13

projection device 11

**FIG. 1**

obtaining the projection geometric parameters of the projection device — S200

calculating a brightness compensation coefficient for each pixel of the image to be projected based on the projection geometric parameters of the projection device — S210

performing brightness compensation on the image to be projected using the brightness compensation coefficient for each of its pixels, resulting in a brightness-compensated image to be projected — S220

projecting this brightness-compensated image to be projected to acquire a measurement image, thereby further obtaining the three-dimensional information of the object under inspection — S230

**FIG. 2**

**FIG. 3**

**FIG. 4**

**FIG. 5**

**FIG. 6**

### INTERNATIONAL SEARCH REPORT

| International application No. |
| --- |
| **PCT/CN2025/112450** |

| | |
| --- | --- |
| **A.** | **CLASSIFICATION OF SUBJECT MATTER** |
| | G01B 11/25(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC:G01B

Documentation searched other than minimum documentation to the extent that such documents are included in the fields searched

Electronic data base consulted during the international search (name of data base and, where practicable, search terms used)

    CNTXT, ENTXTC, WPABSC, ENTXT, VEN, CNKI, CJFD, ISI_Web of Science: 投影, 图像, 图案, 拍摄, 三维, 几何, 参数, 像素, 亮度, 补偿, 系数, 角, 余弦, 增益, project+, image, pattern, three-dimensional, Geometr+, Parameter+, Pixel, brightness , compensat+, Coefficient , angle, cos, cosine, gain

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 119289898 A (SHENZHEN HUAHAN WEIYE TECHNOLOGY CO., LTD.) 10 January 2025 (2025-01-10)<br>    claims 1-10 | 1-10 |
| A | JP 2011137697 A (CANON K.K.) 14 July 2011 (2011-07-14)<br>    description, paragraphs 16 and 22-56, and figures 1-25 | 1-10 |
| A | CN 112734860 A (COMMUNICATION UNIVERSITY OF CHINA) 30 April 2021 (2021-04-30)<br>    entire document | 1-10 |
| A | CN 115200509 A (BEIJING INSTITUTE OF TECHNOLOGY) 18 October 2022 (2022-10-18)<br>    entire document | 1-10 |
| A | CN 110673428 A (HANGZHOU HIKROBOT TECHNOLOGY CO., LTD.) 10 January 2020 (2020-01-10)<br>    entire document | 1-10 |

☑ Further documents are listed in the continuation of Box C.    ☑ See patent family annex.

| | |
| --- | --- |
| \*   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **02 December 2025** | **04 December 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/112450**

## C. DOCUMENTS CONSIDERED TO BE RELEVANT

| Category* | Citation of document, with indication, where appropriate, of the relevant passages | Relevant to claim No. |
|---|---|---|
| A | KR 101653649 B1 (IOVIS CO., LTD.) 05 September 2016 (2016-09-05)<br>entire document | 1-10 |
| A | JP 2015100084 A (NIPPON TELEGRAPH & TELEPHONE CORP.) 28 May 2015 (2015-05-28)<br>entire document | 1-10 |
| A | JP 2010197541 A (SEIKO EPSON CORP.) 09 September 2010 (2010-09-09)<br>entire document | 1-10 |

Form PCT/ISA/210 (second sheet) (July 2022)

**INTERNATIONAL SEARCH REPORT**
Information on patent family members

International application No.

**PCT/CN2025/112450**

| Patent document cited in search report | | | Publication date (day/month/year) | Patent family member(s) | Publication date (day/month/year) |
|---|---|---|---|---|---|
| CN | 119289898 | A | 10 January 2025 | None | |
| JP | 2011137697 | A | 14 July 2011 | None | |
| CN | 112734860 | A | 30 April 2021 | None | |
| CN | 115200509 | A | 18 October 2022 | None | |
| CN | 110673428 | A | 10 January 2020 | None | |
| KR | 101653649 | B1 | 05 September 2016 | None | |
| JP | 2015100084 | A | 28 May 2015 | None | |
| JP | 2010197541 | A | 09 September 2010 | None | |

Form PCT/ISA/210 (patent family annex) (July 2022)